# EUROPÄISCHE PATENTSCHRIFT

(11) **EP 0 609 706 B1**
(45) Veröffentlichungstag und Bekanntmachung des Hinweises auf die Patenterteilung: **26.03.1997**
(21) Anmeldenummer: 94100751.0
(22) Anmeldetag: 20.01.1994
(51) Int. Cl.: H02M 7/00, H02G 5/00, H01L 25/11

(54) **Umrichterbrücke**
Converter bridge
Pont convertisseur

(30) Priorität: 05.02.1993 DE 4303317
(43) Veröffentlichungstag der Anmeldung: 10.08.1994
(73) Patentinhaber: ASEA BROWN BOVERI AG, 5401 Baden (CH)
(72) Erfinder: Gaupp, Osvin, CH-5400 Baden (CH)

(56) Entgegenhaltungen:
- EP-A- 0 254 911
- US-A- 5 172 310

## Beschreibung

### Technisches Gebiet

Die Erfindung bezieht sich auf das Gebiet der Leistungselektronik.

Sie geht aus von einer Umrichterbrücke nach dem Oberbegriff des ersten Anspruchs.

### Stand der Technik

Ein solche Umrichterbrücke ist beispielsweise aus der Europäischen Patentschrift EP-B1-0 254 911 bekannt.

Bei der Umrichterbrücke in der genannten Schrift handelt es sich um einen sogenannten Zweipunkt-Umrichter, welcher im wesentlichen aus zwei Halbbrücken oder Umrichterschaltpolen aufgebaut ist. Die Halbbrücken bestehen je aus zwei abschaltbaren, seriegeschalteten Thyristoren (z.B. GTOs), welchen je eine Freilaufdiode antiparallelgeschaltet ist. Jedem Umrichterschaltpol ist ein Stützkondensator parallelgeschaltet. Die Umrichterschaltpole sind mittels Verbindungs- oder Stromschienen zu einer Umrichterbrücke geschaltet.

An diese Stromschienen wird eine Gleichspannungsquelle angeschlossen. Die GTOs werden nun so ein- und ausgeschaltet, dass durch die Last ein Wechselstrom fliesst. Zusätzlich wird durch das Schalten der GTOs aber auch noch ein hochfrequenter, parasitärer Schwingstrom im Schwingkreis, gebildet durch die Stützkondensatoren und die Induktivitäten der Stromschienen, angeregt. Dieser hochfrequente Schwingstrom belastet zusätzlich zum Arbeitsstrom die Stromschienen und die Stützkondensatoren. Er stellt also eine unerwünschte Störkomponente dar, aufgrund welcher einerseits die Verluste ansteigen und andererseits der Umrichter unnötig belastet wird.

Ein Umrichter mit speziell angeordneten Stromschienen (Plus-u.Minusschiene) zur Verringerung der Impedanz ist aus der Patentanschritt US-A-5 172 310 bekannt.

### Darstellung der Erfindung

Aufgabe der vorliegenden Erfindung ist es, einen Umrichter anzugeben, bei welchem die durch den Schwingstrom entstehenden Verluste minimiert werden ohne gleichzeitig den Arbeitsstrom zu beeinflussen.

Diese Aufgabe wird bei einem Umrichter der eingangs genannten Art durch die Merkmale des ersten Anspruchs gelöst.

Kern der Erfindung ist es also, dass die Stromschienen aus mindestens zwei Teilen bestehen und zwei Stromschienen, welche zwei Halbbrücken verbinden, dicht nebeneinander und bezüglich einer Mittelebene spiegelsymmetrisch gegenüber liegen. In einer solchen Anordnung konzentrieren sich die gegenläufig fliessenden, hochfrequenten Schwingstromanteile in den direkt gegenüberliegenden Teilen der Stromschiene, während der Hauptstromanteil im wesentlichen gleichverteilt in der ganzen Stromschiene fliesst.

Weisen die unmittelbar gegenüber liegenden Teile der Stromschienen nun einen relativ kleinen Leitungsquerschnitt auf, so wird der störende, hochfrequente Schwingstromanteil wirksam gedämpft.

In einem bevorzugten Ausführungsbeispiel bestehen die Stromschienen aus zwei Schenkeln, welche den Stromschienenteilen zugeordnet sind. Somit weist die Stromschiene insgesamt ein L-förmiges Profil auf.

Weitere Ausführungsbeispiele ergeben sich aus den Unteransprüchen.

Der Vorteil des erfindungsgemässen Aufbaus besteht also darin, dass durch die zweiteilige Struktur der Stromschiene die hochfrequenten, störenden Schwingströme wirksam gedämpft werden ohne den Hauptstromanteil unnötig zu beeinträchtigen.

### Kurze Beschreibung der Zeichnungen

Nachfolgend wird die Erfindung anhand von Ausführungs-beispielen im Zusammenhang mit den Zeichnungen näher erläutert.

Es zeigen:
- **Fig. 1**: Eine Umrichterbrücke bestehend aus zwei Halbbrücken;
- **Fig. 2**: Eine erfindungsgemässe Stromschiene im Profil;
- **Fig. 3**: Die erfindungsgemässe Anordnung zweier Stromschienen im Profil;
- **Fig. 4**: Den qualitativen Verlauf der magnetischen Feldlinien entlang des Profils einer erfindungsgemässen Stromschiene für den Hauptstromanteil;
- **Fig. 5a,b**: Den qualitativen Verlauf der Stromdichte entlang der Achsen "1" und "2";
- **Fig. 6**: Den qualitativen Verlauf der magnetischen Feldlinien entlang des Profils einer erfindungsgemässen Stromschiene für den hochfrequenten Schwingstrom; und
- **Fig. 7a,b**: Den qualitativen Verlauf der Stromdichte entlang der Achsen "1" und "2".

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

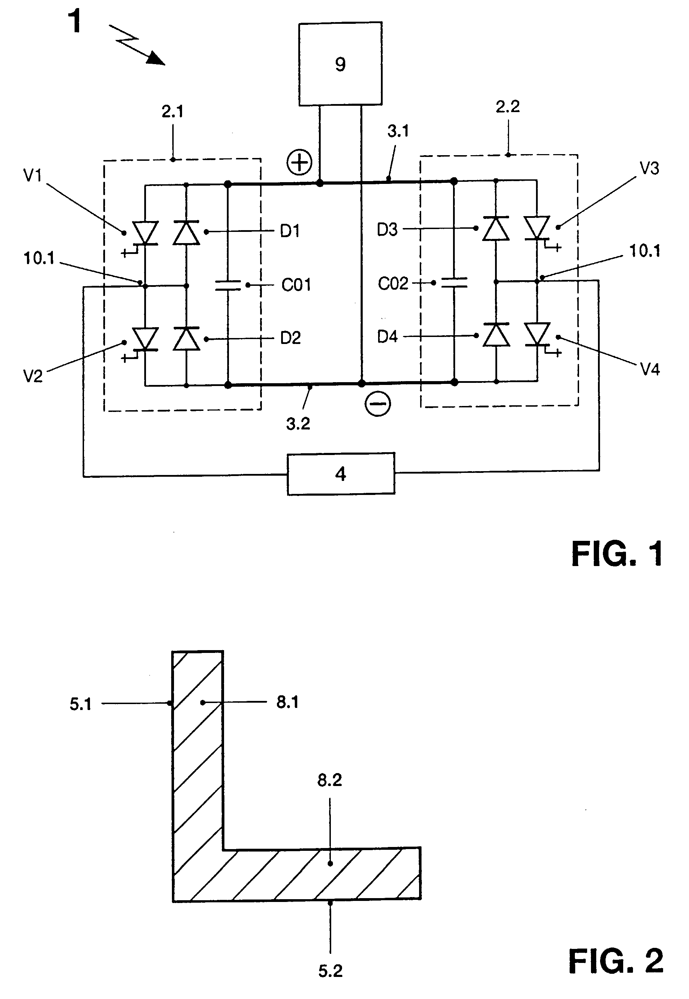

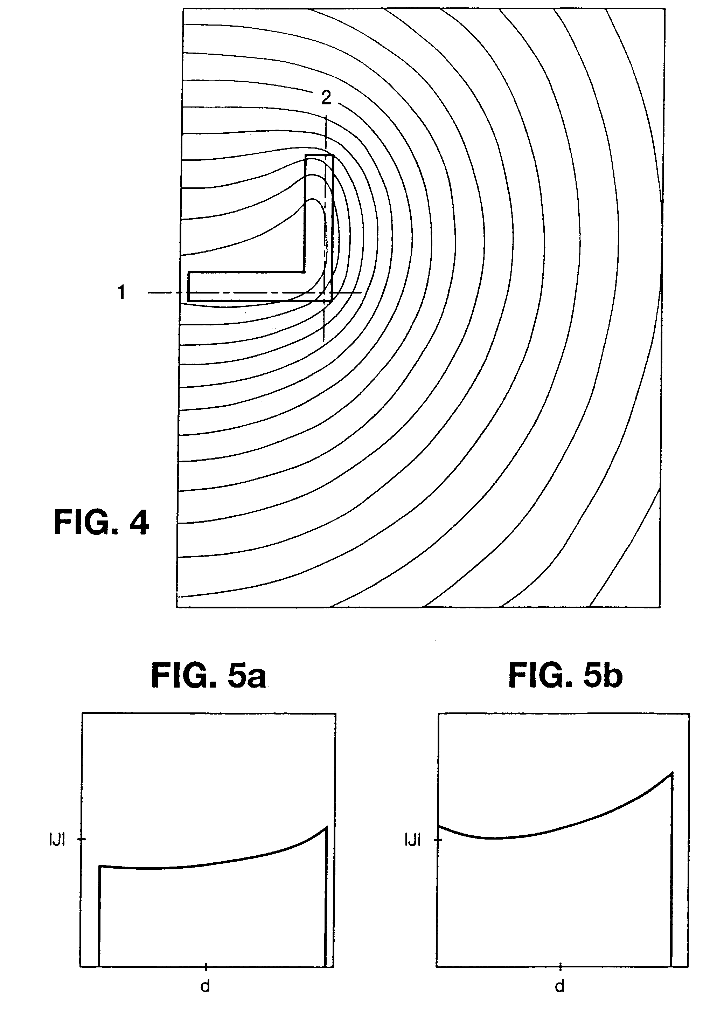

**Figur 1** zeigt eine Umrichterbrücke (1), welche aus mindestens zwei Halbbrücken (2.1, 2.2) besteht. Die Halbbrücken (2.1, 2.2) weisen je zwei seriegeschaltete Ventile (V1-4), z.B. abschaltbare Thyristoren (GTO), dazu antiparallel angeordnete Freilaufdioden (D1-4) und einen Stützkondensator (Co1, Co2) auf. Zwei Halbbrücken sind über zwei Stromschienen (3.1, 3.2) verbunden. An diese Stromschienen (3.1, 3.2) kann eine Gleichspannungsquelle (9) angeschlossen werden. Jede Halbbrücke (2.1, 2.2) weist einen Lastanschluss (10.1, 10.2) auf. An diese Lastanschlüsse (10.1, 10.2) kann eine Last (4) angeschlossen werden.

Im Betrieb wird nun entweder der positive oder der negative Anschluss (+,-) der Gleichspannungsquelle (9) auf die Last durchgeschaltet. Zu diesem Zweck werden die Ventile (V1-4) nach einem bestimmten Verfahren, auf welches hier nicht weiter eingegangen werden soll, angesteuert. Auf diese Weise entsteht in der Last eine im wesentlichen sinusförmige Spannung bzw. ein sinusförmiger Strom gewünschter Frequenz.

Diese Frequenz kann im Beispiel von Umrichterbrücken für Bahnanlagen 16.67 Hz betragen.

Gleichzeitig ist diesem niederfrequenten Hauptstromanteil jedoch ein hochfrequenter Nebenstromanteil überlagert. Dieser entsteht dadurch, dass das Schalten der Ventile (V1-4) den Schwingkreis, gebildet durch die Stützkondensatoren (Co1, und Co2) und die Induktivität der Stromschienen, anregt. Da der ohm'sche Widerstand der Stromschienen möglichst klein sein sollte, entsteht eine schwach gedämpfte, hochfrequente Schwingung, welche Effektivwerte von einigen hundert Ampere annimmt. Diese hochfrequente Schwingung belastet die Stützkondensatoren und die Stromschienen erheblich.

Der Einfluss der hochfrequenten Schwingung kann verringert werden, indem die Schwingung stärker gedämpft wird. Am einfachsten geschieht dies durch Einfügen von Widerständen. Solche Widerstände bringen aber auch erhöhte Verluste für den Hauptstromanteil.

Wünschenswert wäre aber eine Umrichterbrücke, bei welcher selektiv nur der hochfrequente Nebenstromanteil gedämpft werden kann. Bei der vorliegenden Erfindung wird dies durch speziell geformte Stromschienen erreicht.

Die Idee der Erfindung besteht darin, dass die Stromschienen (3.1, 3.2) aus mindestens zwei Teilen (8.1, 8.2) besteht (siehe **Figur 2**), wobei der eine Teil (8.1) im wesentlichen den Hauptstromanteil und der zweite Teil (8.2) den Nebenstromanteil führt. Dadurch kann die Dämpfung der beiden Stromanteile separat eingestellt werden.

Die Aufteilung der Stromanteile in der Stromschiene (3.1, 3.2) basiert auf dem Stromverdrängungseffekt in zwei parallelen Leitern:
Das magnetische Wechselfeld, hervorgerufen durch Wechselströme in den Leitern, induziert in jedem Leiter Wirbelströme. Diese überlagern sich dem Leiterstrom und bewirken eine ungleichmässige Verteilung des Stromes über den Leiterquerschnitt, die man als Stromverdrängung bezeichnet. Ströme, welche in entgegengesetzter Richtung fliessen, bewirken im allgemeinen eine Stromverdrängung nach innen, d.h. in die Richtung des Nachbarleiters, während parallel fliessende Ströme nach aussen gedrängt werden. Die Stromverdrängung ist von der Frequenz des Wechselstromes, dem Abstand zwischen den Leitern und den Leitermaterialien abhängig: Je grösser die Frequenz desto grösser die Stromverdrängung; je grösser der Abstand der zwei Leiter umso kleiner die Verdrängung.

Im vorliegenden Umrichter fliesst der Nebenstromanteil als hochfrequente Ausgleichsschwingung von der ersten Stromschiene (3.1), über den ersten Stützkondensator (Co1), über die zweite Stromschiene (3.2), und über den zweiten Stützkondensator (Co2) zurück zur ersten Stromschiene (3.1). Der Nebenstromanteil fliesst also in den Stromschienen (3.1, 3.2) in entgegengesetzter Richtung. Der niederfrequente Hauptstromanteil hingegen fliesst entweder nur in einer Stromschiene oder in beiden parallel.

Dieser Umstand kann ausgenützt werden, indem die beiden Stromschienen (3.1, 3.2) örtlich nahe beieinander und bezüglich einer dazwischen liegenden Mittelebene (7) spiegelsymmetrisch angeordnet werden. Da die Stromschienen ja aus zwei Teilen (8.1, 8.2) bestehen, konzentriert sich der Nebenstromanteil hauptsächlich in den Teilen (8.2), die sich unmittelbar gegenüber liegen. Der Hauptstromanteil hingegen ist im wesentlichen gleichverteilt bzw. konzentriert sich in den Teilen (8.1), welche von der Mittelebene (7) weiter entfernt sind, je nachdem ob der Hauptstromanteil nur in einem oder in beiden Stromschienen fliesst.

Insbesondere kann nun der Leitungsquerschnitt desjenigen Stromschienenteils (8.2), welcher dem Nebenstromanteil zugeordnet ist klein gemacht werden. Auf diese Weise wird der Nebenstromanteil wirksam gedämpft, ohne den Hauptstromanteil zu beeinflussen.

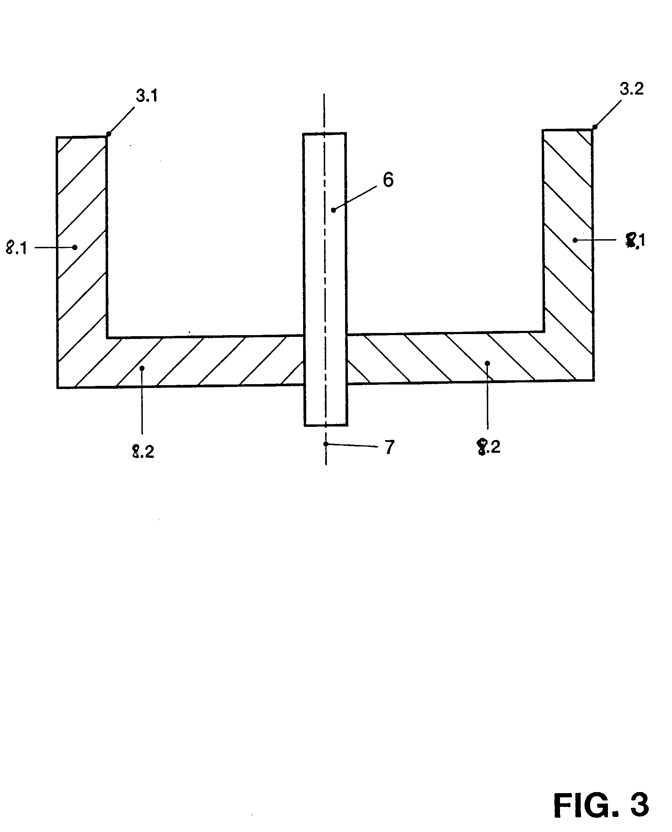

In einem bevorzugten Ausführungsbeispiel, welches in **Figur 2** dargestellt ist, bestehen die Stromschienen (3.1, 3.2) im wesentlichen aus zwei Schenkeln (5.1, 5.2). Diese Schenkel sind den Stromschienenteilen (8.1, 8.2) zugeordnet. Zusammen bilden sie ein L-förmiges Profil. Die beiden Stromschienen (3.1, 3.2) werden im Umrichter nahe nebeneinander und bezügliche einer Mittelebene (7) spiegelsymmetrisch angeordnet. Dies ist in **Figur 3** dargestellt. Die der Mittelebene (7) zugewandten Stromschienenteile (8.2) weisen aufgrund ihres L-förmigen Profils einen kleinen Leitungsquerschnitt auf, während die von der Mittelebene weiter entfernten, in der **Figur 3** von oben nach unten verlaufenden Teile (8.1), einen relativ grossen Leitungsquerschnitt aufweisen.

Zwei Stromschienen bilden zusammen ein unterbrochenes U-förmiges Profil. Bevorzugterweise wird der Spalt zwischen den beiden Stromschienen (3.1, 3.2) entlang der Mittelebene (7) mit einem Isolationskörper (6) ausgefüllt.

Im Betrieb konzentriert sich nun der Nebenstromanteil in den direkt gegenüberliegenden Schenkeln (5.2) der Stromschiene. Da diese aufgrund ihrer Form einen kleineren Leitungsquerschnitt auf als die von der Mittelebene (7) weiter entfernt liegenden Schenkel (5.1) aufweisen, wird der Nebenstromanteil wirksam gedämpft ohne dass der Hauptstromanteil beeinflusst wird.

Messungen und Simulationen haben diese räumliche Aufteilung der Haupt- und Nebenstromanteile in den Stromschienen eindrücklich nachgewiesen.

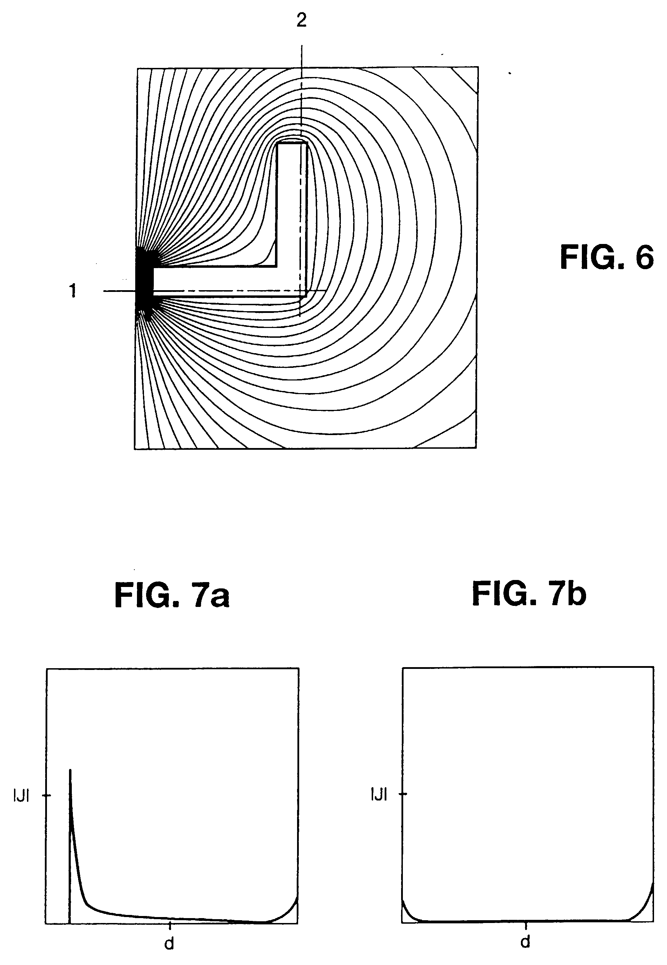

Im folgenden ist jeweils nur eine Stromschiene dargestellt. Die zweite muss man sich spiegelsymmetrisch zum linken Bildrand, der **Figuren 4 und 6** vorstellen. Dieser linke Bildrand stellt gleichzeitig die Mittelebene (7) dar.

In **Figur 4** ist der qualitative Verlauf der magnetischen Feldlinien für parallel fliessende Ströme von 16.67 Hz dargestellt. Wie man anhand der Feldlinien und der daraus berechneten Stromdichten entlang der Achsen "1" und "2" deutlich sieht - in den **Figuren 5a und 5b** qualitativ dargestellt - ist der Hauptstromanteil im wesentlichen gleichverteilt.

Ganz anders sieht es für entgegengesetzt fliessende Ströme von ca. 2.7 kHz aus. Diese Situation ist in den **Figuren 6 und 7a,b** dargestellt. Die Feldlinien für den Nebenstromanteil konzentrieren sich in dem Teil des Schenkels (5.2), welcher nahe der Mittelebene (7) liegt. Diese zeigt sich auch in der Stromdichtenverteilung entlang der Achsen "1" und "2": Der grösste Teil des hochfrequenten Schwingstromes konzentriert sich in dem Teil des Schenkels (5.2), welcher direkt bei der Mittelebene, bzw. direkt gegenüber der zweiten Stromschiene liegt.

Bis anhin war immer von einem L-förmigen Profil die Rede; es ist aber auch denkbar, dass die Stromschienen z.B. ein T-förmiges Profil aufweisen. Gleichermassen kann derjenige Schenkel, welcher der Mittelebene zugewandt ist, auch ein abgeflachtes Profil aufweisen, so dass der Leitungsquerschnitt zur Mittelebene hin noch kleiner gemacht wird.

Insgesamt steht also mit der Erfindung eine Umrichterbrücke zur Verfügung, bei welcher die Dämpfung der hochfrequenten Ausgleichsströme unabhängig vom Hauptstromanteil eingestellt werden kann.

## Patentansprüche

1. Umrichterbrücke (1) umfassend:
a) mindestens zwei Halbbrücken (2.1, 2.2) mit je einem Plus- und einem Minus-Anschluss (+ bzw. -), an welche eine Gleichspannungsquelle anschliessbar ist, wobei
b) die Plus- und Minus-Anschlüsse (+/-) der Halbbrücken (2.1, 2.2) je über Stromschienen (3.1 bzw. 3.2) verbunden sind, und
c) ein durch die Stromschienen (3.1, 3.2) fliessender Strom im wesentlichen einen niederfrequenten Hauptstromanteil und einen hochfrequenten, in den Stromschienen gegenläufig fliessenden Nebenstromanteil aufweist,
dadurch gekennzeichnet, dass
d) die Stromschienen (3.1, 3.2) aus mindestens zwei, **insbesondere gegeneinander abgewinkelten** Stromschienenteilen (8.1, 8.2) besteht,
e) die beiden Stromschienen (3.1, 3.2), welche zwei Halbbrücken (2.1, 2.2) verbinden, örtlich dicht nebeneinander und bezüglich einer dazwischen liegenden Mittelebene (7) spiegelsymmetrisch gegenüber liegen, und
f) sich der Nebenstromanteil hauptsächlich in den unmittelbar gegenüber liegenden Stromschienenteilen (8.2) konzentriert, während der Hauptstromanteil im wesentlichen gleichverteilt in beiden Stromschienenteilen (8.1, 8.2) fliesst.

2. Umrichterbrücke nach Anspruch 1, dadurch gekennzeichnet, dass derjenige Teil (8.1) der Stromschienen, welcher näher bei der Mittelebene (7) liegt, einen relativ kleinen Leitungsquerschnitt aufweist.

3. Umrichterbrücke nach Anspruch 2, dadurch gekennzeichnet, dass die Stromschienen (3.1, 3.2) je aus zwei Schenkeln (5.1, 5.2) bestehen, welche den Stromschienenteilen (8.1, 8.2) zugeordnet sind und welche zusammen ein L-förmiges Profil bilden.

4. Umrichterbrücke nach Anspruch 3, dadurch gekennzeichnet, dass zwei gegenüberliegende Stromschienen (3.1, 3.2) insgesamt ein durch die Mittelebene (7) unterbrochenes U-Profil bilden.

5. Umrichterbrücke nach Anspruch 4, dadurch gekennzeichnet, dass entlang der Mittelebene ein Isolationskörper (6) vorgesehen ist.

6. Umrichterbrücke nach einem der vorangehenden Ansprüche, dadurch gekennzeichnet, dass die Stromschienen aus Kupfer bestehen.

## Claims

1. Converter bridge (1), comprising:
a) at least two half-bridges (2.1, 2.2) each having a positive and a negative terminal (+ and -, respectively), to which it is possible to connect a DC voltage source,
b) the positive and negative terminals (+/-) of the half-bridges (2.1, 2.2) each being connected via busbars (3.1 and 3.2, respectively), and
c) a current flowing through the busbars (3.1, 3.2) essentially having a low-frequency main current component and a high-frequency secondary current component flowing in the opposite direction in the busbars,
characterized in that
d) the busbars (3.1, 3.2) consist of at least two busbar sections (8.1, 8.2) which are, in particular, angled with respect to one another,
e) the two busbars (3.1, 3.2), which connect two half-bridges (2.1, 2.2), are situated locally closely beside one another and opposite one another with mirror symmetry with regard to a centre plane (7) situated between them, and
f) the secondary current component is primarily concentrated in the directly opposite busbar sections (8.2), while the main current component flows with essentially uniform distribution in both busbar sections (8.1, 8.2).

2. Converter bridge according to Claim 1, characterized in that that section (8.2) of the busbars which is situated more closely to the centre plane (7) has a relatively small line cross-section.

3. Converter bridge according to Claim 2, characterized in that the busbars (3.1, 3.2) each consist of two limbs (5.1, 5.2), which are assigned to the busbar sections (8.1, 8.2) and together form an L-shaped profile.

4. Converter bridge according to Claim 3, characterized in that two opposite busbars (3.1, 3.2) taken together form a U-shaped profile interrupted by the centre plane (7).

5. Converter bridge according to Claim 4, characterized in that an insulation body (6) is provided along the centre plane.

6. Converter bridge according to one of the preceding claims, characterized in that the busbars consist of copper.

## Revendications

1. Pont convertisseur comprenant :
a) au moins deux demi-ponts (2.1, 2.2) comportant chacun une borne positive et une borne négative (+ ou -) sur lesquelles peut être raccordée une source de tension,
b) les bornes positive et négative (+/-) des demi-ponts (2.1, 2.2) étant à chaque fois reliées par une barre-bus (3.1 ou 3.2), et
c) un courant qui traverse la barre-bus (3.1, 3.2) présentant essentiellement une composante de courant principal à basse fréquence et une composante de courant auxiliaire à haute fréquence qui traverse la barre-bus en sens inverse
caractérisé par le fait que
d) la barre-bus (3.1, 3.2) est composée d'au moins deux parties de barre-bus (8.1, 8.2) présentant un angle particulier l'une par rapport à l'autre,
e) les deux barres-bus (3.1, 3.2) qui relient deux demi-ponts (2.1, 2.2) sont montées très proches l'une à côté de l'autre et selon une symétrie en miroir par rapport à un plan central (7) qui se trouve entre elles, et
f) la composante de courant auxiliaire se concentre essentiellement dans les parties (8.2) de la barre-bus qui sont immédiatement opposées , alors que la composante de courant principale traverse les deux parties (8.1, 8.2) de la barre-bus avec une distribution essentiellement égale.

2. Pont convertisseur selon la revendication 1, caractérisé par le fait que la partie (8.1) de la barre-bus qui se trouve le plus près du plan central (7) présente une section de puissance relativement faible.

3. Pont convertisseur selon la revendication 2, caractérisé par le fait que les barres-bus (3.1, 3.2) sont chacune composées de deux montants (5.1, 5.2), lesquels sont associés aux parties (8.1, 8.2) des barres-bus et qui forment ensemble un profilé en L.

4. Pont convertisseur selon la revendication 3, caractérisé par le fait que deux barres-bus (3.1, 3.2) opposées forment ensemble un profilé en U interrompu par le plan central (7).

5. Pont convertisseur selon la revendication 4, caractérisé par le fait qu'un corps isolant (6) est prévu le long du plan central.

6. Pont convertisseur selon l'une des revendications précédentes, caractérisé par le fait que les barres-bus sont en cuivre.
